# EUROPEAN PATENT APPLICATION

(11) **EP 2 253 856 A1**
(43) Date of publication of application: **24.11.2010**
(21) Application number: 09160777.0
(22) Date of filing: 20.05.2009
(51) Int. Cl.: F16B 15/00

(54) **Nail Plate**

(71) Applicant: Wolf Systems Limited, Shilton Industrial Estate Shilton Conventry CV7 9QL (GB)
(72) Inventor: Leaney, David, Shilton, Coventry West Midlands CV7 9QL (GB)
(74) Representative: Lawson, Alison Christina

(57) **Abstract**

A nail plate (50) for connecting timber elements, including a plate member (70), and a plurality of engagement formations (34) extending from a surface of the plate member (70) for engagement with at least one timber element, **characterised in that** at least one edge portion (33, 35) of the plate member (70) includes a strengthening formation (40, 42).

## Description

### Description of Invention

The present invention relates to a nail plate for connecting timber elements. A nail plate according to the invention is intended for use in a splice joint, in an elongate structural element, e.g. in a roof truss, having timber elements joined end-to-end, but it will be appreciated that the nail plate will be useable for connecting timber elements in other situations.

Timber roof trusses may be manufactured to any size to fit a building structure. It is common for the required dimensions of one or more structural elements of a roof truss to exceed the length of timber elements available to the constructor, in which case two or more timber elements must be joined to one another end-to-end to achieve a sufficient length. A splice joint is often used to join timber elements in this way; splice joints are generally preferable to scarf joints for this purpose.

In a splice joint between two timber elements which are disposed end-to-end of one another, end faces of the timber elements are preferably flat and square to the lengths of the timbers, and face one another adjacent and parallel to one another. Nail plates are engaged with respective sides of the timber elements, spanning the joint between the timber elements. Each nail plate is pressed against the timbers so that a number of engagement formations which extend from the surface of the plate are embedded in the timber elements to hold the nail plate in place, and hence secure the timber elements together. Generally, each nail plate is rectangular in shape with edges extending parallel to the edges of the timber elements.

As manufactured, the end faces of the timber elements abut one another. However, when a truss is installed in a building which is in use, and heated, the moisture content of the timber elements is likely to drop, and a small gap may appear between the end faces. For the purpose of testing the strength of a joint, structural elements including splice joints are commonly manufactured with timber elements separated by a small gap. This allows the splice joint to be tested under conditions comparable to those occurring where shrinkage has taken place in a structural element installed in a building.

In use, the loads to which the structural elements of a roof truss are subjected include bending moments, which act on the structural elements in the general plane of the truss. Where the structural element is disposed generally horizontally, or is inclined to the horizontal, the nail plate edges that extend lengthwise of the structural element include an upper and a lower edge. Where the structural element is loaded, usually the lower edge of each nail plate is subjected to a tension force extending lengthwise of the edge, and the upper edge is subject to a compressive force lengthwise of the edge.

When a splice joint is overloaded, e.g. under test conditions, the tensile force and compressive force acting on the nail plate cause it to fail. The upper edge of the nail plate typically buckles when the load on the structural element is too great, allowing the ends of the timber elements to press against one another and increasing the tensile stress on the lower edge of the plate. Eventually, the lower edge of the plate may tear, causing a failure of the joint. If such failure were to occur in a building, it would cause severe structural problems in the building structure, which may lead to issues concerning the safety of the building.

According to a first aspect of the invention, we provide a nail plate for connecting timber elements, including a plate member, and a plurality of engagement formations extending from a surface of the plate member for engagement with at least one timber element, **characterised in that** at least one edge portion of the plate member includes a strengthening formation.

The edges of the plate are subject to the largest forces arising in response to bending moments in a roof truss during use, so the provision of strengthening formations at an edge portion or portions of the nail plate makes the edge portion(s) of the plate more resistant to the compressive and tensile forces.

The or each strengthening formation may be a portion of the plate member having an increased thickness. Increasing the thickness of the material disposed at an edge or edges of the plate serves to increase the resistance of the plate to deformation.

The edges of the plate member may be generally straight.

It is preferable that the or each edge portion of the plate member including a strengthening formation lies along an entire edge of the plate member. Strengthening an entire edge of the plate is the most effective way to ensure that the plate does not deform, and that there are no 'weak points' along the edge, which damage is likely to occur.

It is further preferable that the or each strengthening formation is a folded edge, formed by folding a portion of the material of the plate member back against a surface of the plate member to provide an edge portion of the plate member with a double thickness of material. Folding the edges of the plate forms smooth edges, enabling the plate to be handled more safely.

It is further preferable that the or each folded edge is folded towards a surface of the plate member opposing that from which the plurality of engagement formations extends. This allows a surface of the plate member to lie flat against the respective surfaces of the timber elements, with the engagement formations embedded in the timber elements.

It is also preferable that a first edge of the plate member includes a first strengthening formation, and a second edge of the plate member includes a second strengthening formation, the first edge and second edges lying opposite one another. The edges which are the upper and lower edges of the plate, in use, are preferably the edges that are strengthened, as these are the edges of the plate subjected to the greatest forces when the nail plate is deployed at a splice joint in a generally horizontal structural element.

The strengthening formations may be disposed generally parallel to one another.

The plurality of engagement formations may be formed integrally from the material of the plate. Such an arrangement is well known in nail plates.

The nail plate may include integral attachment formations for engagement with both timber elements in a splice joint, or may further include a plurality of apertures for providing connection means. This allows a builder to attach a plate to a timber element on site using any desired connection means, such as screws, nails, or the like.

According to a second aspect of the invention, we provide a structural element, including two timber elements disposed end-to-end of one another, and at least one nail plate, wherein at least a portion of the or each nail plate is secured to at least a first surface of each timber element, **characterised in that** the or each nail plate is a nail plate according to the first aspect of the invention.

According to a third aspect of the invention, we provide a roof truss including a plurality of structural elements, **characterised in that** at least one of the structural elements is a structural element according to the second aspect of the invention.

Embodiments of the invention will now be described by way of example only with reference to the accompanying drawings wherein;
Figure 1 is a front view of a roof truss,
Figure 2 is a perspective view of a portion of figure 1, including a nail plate embodying the present invention, and
Figure 3 is a perspective view of a nail plate embodying the present invention.

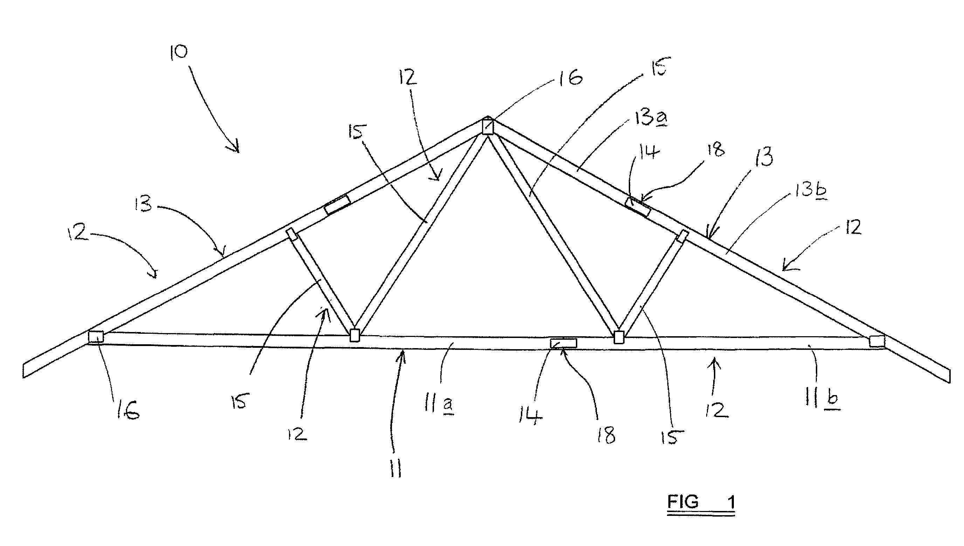

Referring firstly to figure 1 of the drawings, a roof truss 10 is shown, including a plurality of structural elements 12. These structural elements include a ceiling tie 11, rafters 13, and webs 15 extending between the rafters and ceiling tie. These structural elements are each in the form of an elongate beam of timber, and preferably each elongate beam has a generally rectangular cross-section. At intersections between the structural elements 12, nail plates 16 are used to hold the timber elements relative to one another.

The ceiling tie 11 is relatively long, and of greater length than that of which timber beams are readily available. Therefore, it comprises two timber elements 11a, 11b joined to one another end to end at a splice joint 18. Similarly the rafters 13 are each too long to comprise a single timber element, and each therefore comprises two timber elements 13a, 13b joined at a splice joint. At each splice joint 18 the ends of the respective timber elements 11a 11b / 13a, 13b are cut square to the length of the structural element 12 and face one another, and are secured together by nail plates 14 engaged with opposite sides of the timber elements 11a, 11b, 13a, 13b in the region of the joint. Where the structural elements 12 intersect one another, nail plates 16 are disposed at the intersections between structural elements 12 across the joints between the beams, on opposing sides of the plane in which the beams lie. In this way, two or more structural elements 12 may be held together.

Nail plates 14, 16 each comprise a plate member 66, formed from a metal, such as stainless steel or (more usually) galvanised mild steel, having a plurality of engagement formations or "nails" 34 formed integrally from the material of the plate, pressed out from the plate to lie generally perpendicular to the surface of the plate. In this embodiment, the nail plates 14, 16 are rectangular, but they may in principle be of any shape to suit the joint in which they are used. In use, nail plates 14, 16 are pressed into engagement with timber elements 11a, 11b, 13a, 13b in the required relative positions, so that the engagement formations 34 penetrate the surfaces of the timber elements, so as to hold the elements relative to one another.

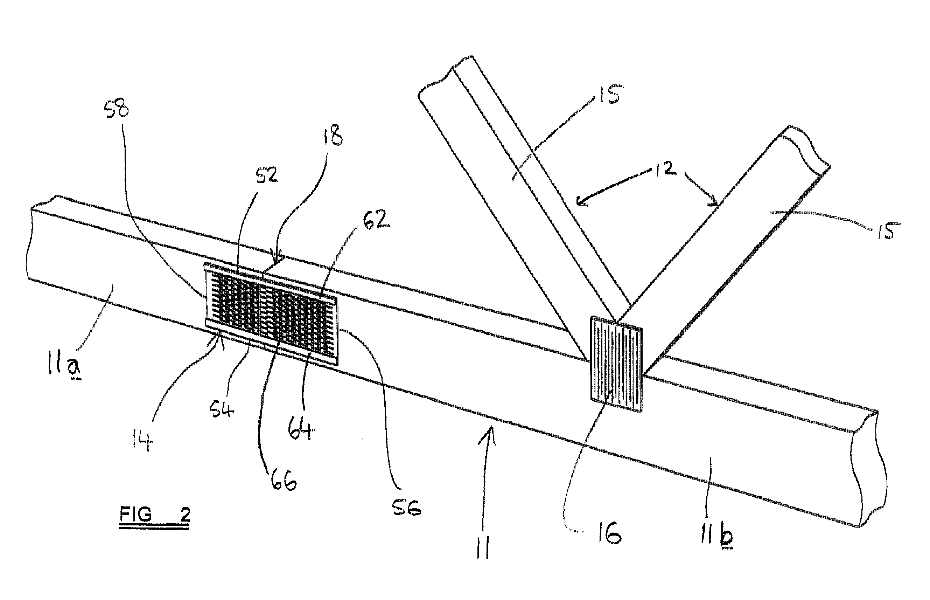

Figure 2 shows in more detail a portion of the roof truss 10, where the ceiling tie 11 is attached by way of nail plates 16 to two webs 15. The ceiling tie 11 is formed from two timber elements 11a, 11b, which are secured to one another in a splice joint by nail plates 14, such that nail plates 14 are secured to opposing sides of the ceiling tie 11, and align lengthwise with it. Approximately equal portions of each nail plate 14 overlie each of the timber elements 11a, 11b, so that the nail plate 14 is connected securely to them both, and extends across the splice joint 18 between them so as to hold the timber elements 11a, 11b to one another.

Engagement formations, as above described, extend from the surface of the plate member 66 and are embedded in the surfaces of the timber elements 11a, 11b. The engagement formations are formed in pairs, wherein a portion of the material of the plate member is pressed out during manufacturing to provide two elongate teeth, leaving an elongate aperture in the plate member between each pair.

Where a nail plate 14 is deployed in a splice joint to hold two generally horizontal timber elements (such as 11a,11b) to one another, it is stressed in a manner dependent upon the loads (including bending moments and shear stresses) borne by the elements. In response to a bending moment, the upper edge portion 52 of the nail plate 14 is subjected (in the usual mode of loading of a roof truss) to compressive forces acting lengthwise upon it, and the lower edge portion 54 is subjected to tensile forces acting lengthwise upon it. As the load on the structural element increases, the magnitude of the forces acting on the nail plate 14 increases. When, under test conditions, the compressive forces acting on the upper edge of nail plate are too great for the plate to bear, the nail plate 14 will buckle. If forces continue to be applied to the plate, it will eventually fail, which may include the lower edge portion 54 of the plate tearing. It is therefore advantageous for the upper 52 and lower 54 edge portions of the nail plate 14 to be reinforced so as to make the nail plate 14 more resistant to these forces.

For this purpose, those nail plates 14 employed as splice plates, holding timber elements 11a, 11b to one another to form the ceiling tie 11, and the timber elements 13a, 13b to form the rafters 13, further include strengthening formations 62, 64. Whilst in this embodiment the invention is described in relation to the nail plates 14 acting as splice plates, the invention may apply to nail plates used for holding structural elements together at any part of a structure, such as the nail plates 16 connecting the structural elements 12 to one another.

In the embodiments described, a strengthening formation 62, 64 is a folded edge, or 'rolled edge', wherein an edge portion of the plate member is folded back against a surface of the plate member to form an elongate strip of double-thickness material. The folded portion preferably lies against the surface of the nail plate 14 not in contact with the timber elements, but may lie against either surface of the plate member 14.

As cut from steel strip, a standard nail plate might have rough or sharp edges, which may make the nail plate difficult to handle. An advantage of a strengthening formation 62, 64 being a folded edge, is that folding or rolling the plate member produces a relatively smooth edge, which allows the nail plate 14 to be handled more easily. Although the strengthening formations 62, 64 are folded edges in this embodiment, they may take alternative forms, such as edges with thicker portions formed integrally during its manufacture.

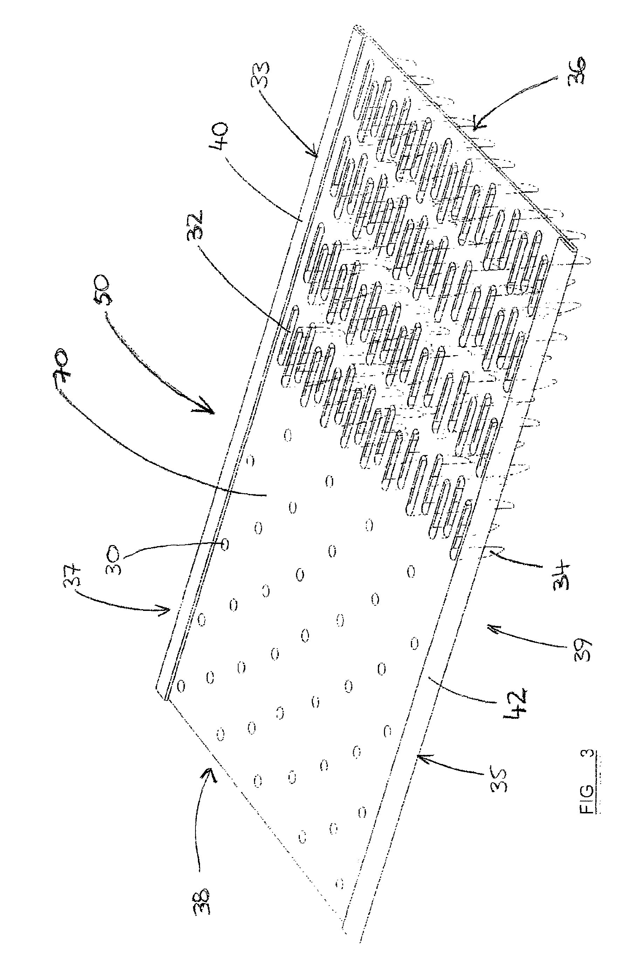

Figure 3 shows an alternative embodiment of nail plate in accordance with the invention. In this embodiment, the nail plate 50 includes a plurality of engagement formations 34 which extend from its surface adjacent a first end 36 of the plate, and includes a plurality of apertures 30 in its surface adjacent a second end 38. The plurality of apertures 30 are suitable for allowing attachment means, such as screws or nails, to be inserted by a user to hold the nail plate 50 relative to a surface. A plate including such a plurality of apertures 30 for this purpose is commonly known as a field splice plate. The engagement formations 34 adjacent the first end are formed in pairs, in the same manner as described in relation to the previous embodiment shown in figure 2, i.e. a portion of the material of the plate member 70 is pressed out during manufacturing to provide two elongate teeth having an elongate aperture between them. First and second strengthening formations 40, 42 are formed at first and second edge portions 37, 39 respectively, by folding a portion of the material of the plate member 70 back against the surface of the plate member 70 to provide an elongate portion of the plate member along each of the respective first and second edges with a double thickness of material. The strengthening formations 40, 42 are folded towards the surface of the plate member 70 opposing the surface from which the engagement formations 34 extend.

In the embodiments of the invention shown, the strengthening formations 62, 64 are shown to lie along the entire length of the nail plate 14. In further alternative embodiments of the invention, strengthening formations 62, 64 may lie along only a portion of an edge, or edges, of a nail plate. In a further embodiment of the invention, the strengthening formations may be folded toward the same surface of the plate member 70 as that from which the engagement formations extend.

To hold two timber elements 11a, 11b to one another to form a structural element 12 using a nail plate 14, the timber elements 11a, 11b are first aligned so that they lie lengthwise of one another, with the respective end faces of the timber elements 11a, 11b lying against one another. Nail plates 14 are positioned so that approximately half of the surface of each plate lies over each of the timber elements 11a, 11b with the engagement formations facing the timber elements 11a, 11b, such that the strengthening formations 62, 64 are disposed lengthwise of the timber elements 11a, 11b, and the nail plates 14 being disposed on opposite surfaces of the timber elements 11a, 11b to one another. The nail plates 14 are then pressed so that the engagement members 34 engage with the timber elements, to hold the timber elements 11a, 11b to one another, such that the plate members 70 lie generally flat against the surfaces of the timber elements 11a, 11b.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A nail plate (50) for connecting timber elements, including a plate member (70), and a plurality of engagement formations (34) extending from a surface of the plate member (70) for engagement with at least one timber element, **characterised in that** at least one edge portion (33, 35) of the plate member (70) includes a strengthening formation (40, 42).

2. A nail plate (50) according to claim 1, further **characterised in that** the or each strengthening formation (40, 42) is a portion of the plate member (33, 35) having an increased thickness.

3. A nail plate (50) according to any one of the preceding claims, further **characterised in that** edges (36, 37, 38, 39) of the plate member (70) are generally straight.

4. A nail plate (50) according to any one of the preceding claims, further **characterised in that** the or each edge portion (33, 35) of the plate member (70) including a strengthening formation (40, 42) lies along an entire edge (37, 39) of the plate member.

5. A nail plate (50) according to any one of the preceding claims, further **characterised in that** the or each strengthening formation (40, 42) is a folded edge, formed by folding a portion of the material of the plate member (70) back against a surface of the plate member (70) to provide an edge portion (33, 35) of the plate member (70) with a double thickness of material.

6. A nail plate (50) according to claim 5, further **characterised in that** the or each folded edge is folded towards a surface of the plate member (70) opposing that from which the plurality of engagement formations (34) extends.

7. A nail plate (50) according to any one of the preceding claims, further **characterised in that** a first edge (37) of the plate member (70) includes a first strengthening formation (40), and a second edge (39) of the plate member includes a second strengthening formation (42), the first edge (37) and second edge (39) lying opposite one another.

8. A nail plate (50) according to claim 7, further **characterised in that** the strengthening formations (40, 42) are disposed generally parallel to one another.

9. A nail plate (50) according to any one of the preceding claims, further **characterised in that** the plurality of engagement formations (34) is formed integrally from the material of the plate.

10. A nail plate (50) according to any one of the preceding claims, further **characterised in that** the plate member (70) further includes a plurality of apertures (30) for providing connection means.

11. A structural element (12), including two timber elements (11a, 11 b) disposed end-to-end of one another, and at least one nail plate (50), wherein at least a portion of the or each nail plate (50) is secured to at least a first surface of each timber element (11a, 11b), **characterised in that** the or each nail plate (50) is a nail plate (50) according to any one of claims 1 to 10.

12. A roof truss (10) including a plurality of structural elements (12), **characterised in that** at least one of the structural elements (12) is a structural element (12) according to claim 11.
